# EUROPEAN PATENT APPLICATION

(11) **EP 4 156 115 A1**
(43) Date of publication of application: **29.03.2023**
(21) Application number: 22822838.3
(22) Date of filing: 23.05.2022
(51) Int. Cl.: G06V 10/00

(54) **METHOD AND APPARATUS FOR IDENTIFYING PRODUCT THAT HAS MISSED INSPECTION, ELECTRONIC DEVICE, AND STORAGE MEDIUM**

(30) Priority: 02.07.2021 CN 202110751437
(71) Applicant: BEIJING BAIDU NETCOM SCIENCE TECHNOLOGY CO., LTD., Beijing 100085 (CN)
(72) Inventor: YANG, Suhui, Beijing 100085 (CN); NIE, Lei, Beijing 100085 (CN); XIAO, Huihui, Beijing 100085 (CN)
(74) Representative: Maiwald GmbH
(86) International application number: PCT/CN2022/094501
(87) International publication number: WO 2023/273695

(57) **Abstract**

The disclosure provides a method and an apparatus for recognizing product detection missed, an electronic device, and a storage medium, and relates to a field of computer technologies and more particularly to a field of artificial intelligence technologies such as computer vision, natural language processing, image processing, and deep learning. The detailed implementation includes: obtaining a surveillance video; generating product detection results by inputting video frames of the surveillance video into a product detection model; generating detecting action recognition results by inputting the video frames of the surveillance video into an action recognition model; and determining whether product detection is missed based on the product detection results and the detecting action recognition results. In this way, it may be quickly determined whether detection of a product in an industrial production line is missed, with a high detection accuracy.

## Description

### TECHNICAL FIELD

The disclosure relates to the field of computer technologies and more particularly to the field of artificial intelligence technologies, such as computer vision, natural language processing, image processing, and deep learning, and further relates to a method and an apparatus for recognizing product detection missed, an electronic device, and a storage medium.

### BACKGROUND

Quality detection for an electrode (product) is an important part of industrial production technologies. Each procedure on an assembly line of modern quality detection for the electrode is completed by a specific person and needs to be processed step by step, and each person does a specific job. Generally, people at work may feel bored quickly to cause a missed detection for the electrode on a certain link, thus causing an important impact on a final yield rate of the electrode.

In the related art, there are mainly the following three ways for recognizing electrode detection missed on a factory assembly line.
① The first way is a judging mode of manually observing a surveillance video, that is, manually observing a behavior surveillance video where a quality inspector of each assembly line in a workshop detects the electrode;
② The second way is a computer vision method based on tracking. With the method, each electrode on the assembly line is tracked, and it is determined whether an ID (Identity Document) of the tracked electrode is switched, which may assist to judge whether the product is detected.
③ The third way is a method of introducing posture estimation. Firstly, body key points of the quality inspector in video frames are obtained by key point location. It is judged whether a posture of the quality inspector is a correct posture for electrode detection based on the body key points, and then information on whether the product detection is missed is obtained indirectly.

### SUMMARY

The disclosure provides a method and an apparatus for recognizing product detection missed, an electronic device, and a storage medium.

According to an aspect of the disclosure, a method for recognizing product detection missed is provided. The method includes: obtaining a surveillance video; generating product detection results by inputting video frames of the surveillance video into a product detection model; generating detecting action recognition results by inputting the video frames of the surveillance video into an action recognition model; and determining whether product detection is missed based on the product detection results and the detecting action recognition results.

According to another aspect of the disclosure, an apparatus for recognizing product detection missed is provided. The apparatus includes: a first obtaining module, configured to obtain a surveillance video; a first generating module, configured to generate product detection results by inputting video frames of the surveillance video into a product detection model; a second generating module, configured to generate detecting action recognition results by inputting the video frames of the surveillance video into an action recognition model; and a determining module, configured to determine whether product detection is missed based on the product detection results and the detecting action recognition results.

According to another aspect of the disclosure, an electronic device is provided. The electronic device includes: at least one processor and a memory. The memory is communicatively coupled to the at least one processor. The memory is configured to store instructions executable by the at least one processor. The at least one processor is caused to implement the method for recognizing product detection missed according to the above aspect in the embodiment when the instructions are executed by the at least one processor.

According to another aspect of the disclosure, a non-transitory computer readable storage medium having computer instructions and a computer program stored thereon is provided. The computer instructions are configured to cause a computer to execute the method for recognizing product detection missed according to the above aspect in the embodiment.

According to another aspect of the disclosure, a computer program product including a computer program is provided. The method for recognizing product detection missed according to the above aspect in the embodiment is implemented when the computer program is processed by a processor.

It should be understood that, content described in the Summary is not intended to identify key or important features of embodiments of the disclosure, nor is it intended to limit the scope of the disclosure. Other features of the disclosure will become apparent from the following description.

### BRIEF DESCRIPTION OF THE DRAWINGS

The accompanying drawings are used for better understanding the solution and do not constitute a limitation of the disclosure.
FIG 1 is a flow chart illustrating a method for recognizing product detection missed according to an embodiment of the disclosure.
FIG 2 is a block diagram illustrating a time sequence of a method for recognizing product detection missed according to embodiments of the disclosure.
FIG 3 is a flow chart illustrating a method for recognizing product detection missed according to another embodiment of the disclosure.
FIG 4 is a flow chart illustrating a method for recognizing product detection missed according to another embodiment of the disclosure.
FIG 5 is a flow chart illustrating a method for recognizing product detection missed according to another embodiment of the disclosure.
FIG 6 is a structural schematic diagram illustrating a slow-fast action recognition network according to embodiments of the disclosure.
FIG 7 is a structural block diagram illustrating an apparatus for recognizing product detection missed according to embodiments of the disclosure.
FIG 8 is a block diagram illustrating an electronic device for implementing a method for recognizing product detection missed according to embodiments of the disclosure.

### DETAILED DESCRIPTION

Description will be made below to embodiments of the disclosure with reference to accompanying drawings, which includes various details of embodiments of the disclosure to facilitate understanding and should be regarded as merely examples. Therefore, it should be recognized by the skilled in the art that various changes and modifications may be made to the embodiments described herein without departing from the scope and spirit of the disclosure. Meanwhile, for clarity and conciseness, descriptions for well-known functions and structures are omitted in the following description.

Description will be made below to a method and an apparatus for recognizing product detection missed, and an electronic device according to embodiments of the disclosure with reference to accompanying drawings.

Artificial intelligence (AI) is a subject that studies computers to simulate certain thought processes and intelligent behaviors (such as learning, reasoning, thought, and planning) of humans. The AI relates to both hardware and software technologies. The hardware technologies of the artificial intelligence generally include technologies such as sensors, dedicated artificial intelligence chips, cloud computing, distributed storage, and big data processing. The software technologies of the artificial intelligence include some aspects such as computer vision technologies, speech recognition technologies, natural language processing technologies and learning, big data processing technologies, and knowledge map technologies.

Natural language processing is an important direction in the fields of computer science and artificial intelligence. It studies various theories and methods that may realize effective communication between humans and computers in natural language. The natural language processing is a science that integrates linguistics, computer science and mathematics.

Learning is a new study direction in the field of machine learning. Learning is to learn an inherent law and a representation hierarchy of sample data. Information obtained during the deep learning process is helpful to interpretation of data such as characters, images and sounds. An ultimate goal of the learning is to enable machines to have an ability to analyze and learn like human beings, and to recognize data such as characters, images and sounds. The learning is a complex machine learning algorithm, and has achieved far more results in speech and image recognition than the previously related art.

Computer vision is a science that studies how to enable machines to "see", and further refer to perform machine vision, such as recognition, tracking and measurement, on a target by cameras and computers instead of human eyes, and further perform image processing, to enable the target through computer processing to become an image more suitable for human eyes to observe, or transmission to instruments for detection. As a scientific subject, the computer vision studies related theories and technologies, and tries to establish an AI system that may obtain "information" from images or multidimensional data. The information here may refer to information defined by Shannon and configured to help make a "decision". Because perception may be regarded as extracting information from a sensory signal, the computer vision may also be regarded as a science for studying how to enable the artificial intelligence system to "perceive" from the images or the multidimensional data.

The method for recognizing the product detection missed according to embodiments of the disclosure may be executed by the electronic device. The electronic device may be a PC (personal computer), a tablet, a server, or the like, which is not limited herein.

In embodiments of the disclosure, a processing component, a storage component, and a driving component may be provided in the electronic device. Alternatively, the driving component and the processing component may be integrated. The storage component may be configured to store an operating system, an application program or other program modules. The processing component may be configured to implement the method for recognizing the product detection missed according to embodiments of the disclosure by executing the application program stored in the storage component.

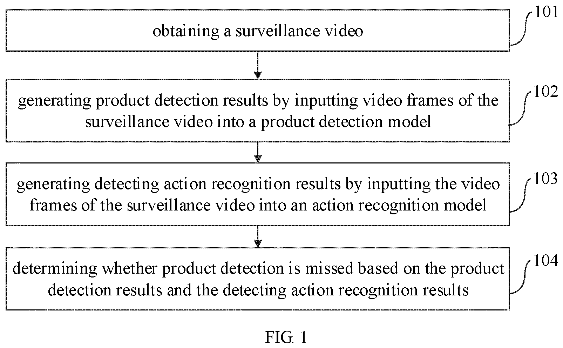

FIG 1 is a flow chart illustrating a method for recognizing product detection missed according to an embodiment of the disclosure.

The method for recognizing the product detection missed according to embodiments of the disclosure may also be executed by an apparatus for recognizing product detection missed according to embodiments of the disclosure. The apparatus may be configured in the electronic device, to implement: generating product detection results by inputting video frames of an obtained surveillance video into a product detection model; generating detecting action recognition results by inputting the video frames of the obtained surveillance video into an action recognition model; and determining whether product detection is missed based on the product detection results and the detecting action recognition results. Therefore, it may be quickly determined whether detection of a product in an industrial production line is missed, with a high detection accuracy.

As a possible implementation, the method for recognizing the product detection missed according to embodiments of the disclosure may also be executed at a server. The server may be a cloud server. The method for recognizing the product detection missed may be executed in a cloud.

FIG 1 illustrates the method for recognizing the product detection missed. The product may be any product, such as an electrode. The method may include the following blocks at 101-104.

At block 101, a surveillance video is obtained.

It should be noted that, the surveillance video described in embodiments may be collected by a surveillance device on a product production line (i.e., the industrial production line). The surveillance device may include a high-definition camera, a sensor, and the like.

A communication connection may be established between the surveillance device and the electronic device that may execute the method for recognizing the product detection missed according to embodiments of the disclosure. The communication connection may be at least one of wireless network connection and wired network connection, such that the surveillance device may transmit (send) the surveillance video collected to the electronic device in real time. Alternatively, the surveillance video in the surveillance device may be manually copied and inputted into the electronic device.

At block 102, product detection results are generated by inputting video frames of the surveillance video into a product detection model. It should be noted that, the product detection model described in embodiments may be trained in advance and pre-stored in a storage space of the electronic device for facilitating calling and application. The storage space is not limited to an entity-based storage space, such as a hard disk, but also a storage space (cloud storage space) of a network hard disk connected to the electronic device.

Training and generation of the product detection model may be performed by a training server. The training server may be the cloud server or a host of a computer. A communication connection is established between the training server and the electronic device that may execute the method for recognizing the product detection missed according to embodiments of the disclosure. The communication connection may be at least one of the wireless network connection and the wired network connection. The training server may send the product detection model trained to the electronic device, such that the electronic device may call the product detection model when needed, thus greatly reducing a calculation pressure of the electronic device.

In embodiments of the disclosure, the electronic device may first perform frame extraction processing on the surveillance video to obtain the video frames of the surveillance video after obtaining the surveillance video.

In detail, after the surveillance video is obtained, the video frames of the surveillance video may be obtained by the electronic device performing frame extraction processing on the surveillance video based on a preset frame-extracting algorithm. The preset frame-extracting algorithm may be calibrated based on an actual situation. For example, the preset frame-extracting algorithm may be a frame-extracting resampling algorithm.

As a possible implementation, after the surveillance video is obtained, the video frames of the surveillance video may be obtained by the electronic device performing frame extraction processing on the surveillance video based on a frame-extracting model. It should be noted that, the frame-extracting model described in embodiments may be trained in advance and pre-stored in the storage space of the electronic device for facilitating calling and application.

As another possible implementation, after the surveillance video is obtained, the video frames of the surveillance video may also be obtained by the electronic device performing frame extraction processing on the surveillance video with a frame extraction tool (e.g., a plug-in).

Further, after the video frames of the surveillance video is obtained by the electronic device, the product detection model may be called out from the storage space of the electronic device, and the video frames may be inputted into the product detection model, such that the video frames of the surveillance video may be detected by the product detection model, to obtain the product detection results outputted (generated) by the product detection model.

It should be noted that, the product detection model described in embodiments may be a detection model for an electrode, a glove and a body. The detection model for the electrode, the glove and the body may include a variety of electrode detection sub-models, glove detection sub-models, human detection sub-models, and the like, and a specific situation may be set as required.

In embodiments of the disclosure, after the video frames of the surveillance video are obtained by the electronic device, each video frame may also be scaled, and the video frame scaled may be inputted into the product detection model, to generate the product detection results.

At block 103, detecting action recognition results are generated by inputting the video frames of the surveillance video into an action recognition model. It should be noted that, the action recognition model described in embodiments may also be trained in advance, and stored in the storage space of the electronic device in advance for facilitating calling and application.

In detail, after the video frames of the surveillance video are obtained by the electronic device, the action recognition model may be called out from the storage space of the electronic device, and the video frames may be inputted into the action recognition model, such that the video frames (such as, detecting an electrode) of the surveillance video are recognized by the action recognition model, to obtain the detecting action recognition results outputted (generated) by the action recognition model.

At 104, it is determined whether product detection is missed based on the product detection results and the detecting action recognition results.

In detail, after the product detection results and the detecting action recognition results are obtained, the product detection results and the detecting action recognition results may be parsed by the electronic device to determine whether detection of the product (i.e., a product produced (transported) on the industrial production line) is missed based on the parsed result.

With embodiments of the disclosure, the surveillance video is obtained first, and the product detection results are generated by inputting the video frames of the surveillance video into the product detection model. Then, the detecting action recognition results are generated by inputting the video frames of the surveillance video into the action recognition model. Finally, it is determined whether product detection is missed based on the product detection results and the detecting action recognition results. In this way, it may be quickly determined whether detection of a product in an industrial production line is missed, with a high detection accuracy.

For describing the above embodiment clearly, in an embodiment of the disclosure, the method for recognizing the product detection missed further includes: storing the video frames of the surveillance video into a video-frame database as training samples, and optimizing the product detection model and the action recognition model respectively based on the training samples.

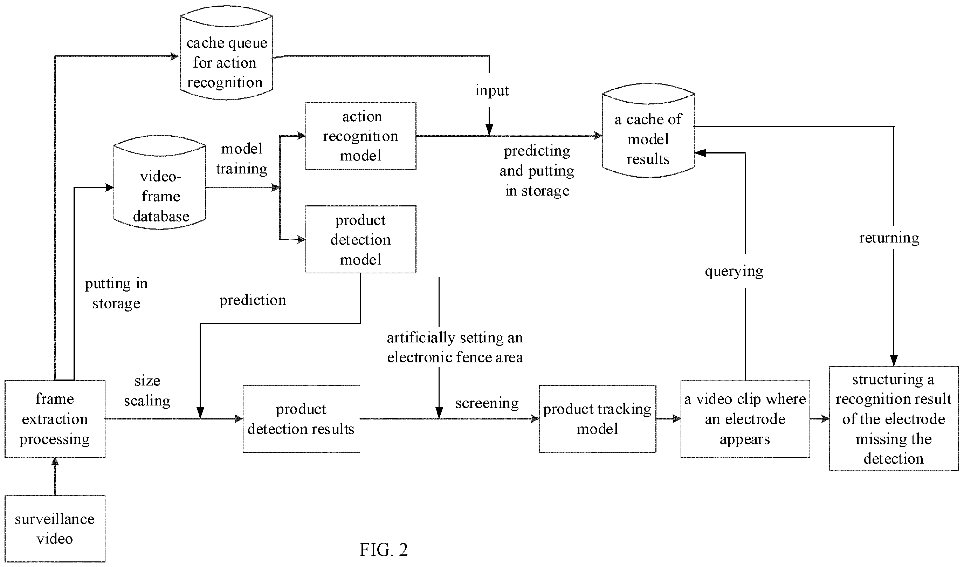

In detail, referring to FIG 2, after the electronic device obtains the surveillance video, frame extraction processing may be performed on the surveillance video based on the frame-extracting resampling. That is, frame extraction processing is performed on the surveillance video based on an actual frame rate of the surveillance video. Samples for a normal detection electrode and samples of a missed detection electrode are sampled from all video frames that are subjected to frame extraction processing based on a manually-preset hyperparameter of a ratio between positive samples and negative samples, and the samples are stored in the video-frame database as the training samples (that is, the training samples of the product detection model and the action recognition model). The hyperparameter may be calibrated based on an actual situation. For example, a ratio of the positive samples to the negative samples may be 3:1. In this way, high-quality training samples may be provided for the product detection model and the action recognition model, thus guaranteeing a training effect, and well avoiding a category screw problem of model prediction caused by imbalance of sample categories.

Further, optimization training may be performed on the product detection model and the action recognition model by a relevant personnel based on the training samples in the video-frame database, and the product detection model and the action recognition model subjected to the optimization training are pre-stored in the storage space of the electronic device for facilitating calling and application. In this way, the product detection model and the action recognition model may be optimized, thus improving model accuracy and assisting in improving accuracy of product detection in the industrial production line.

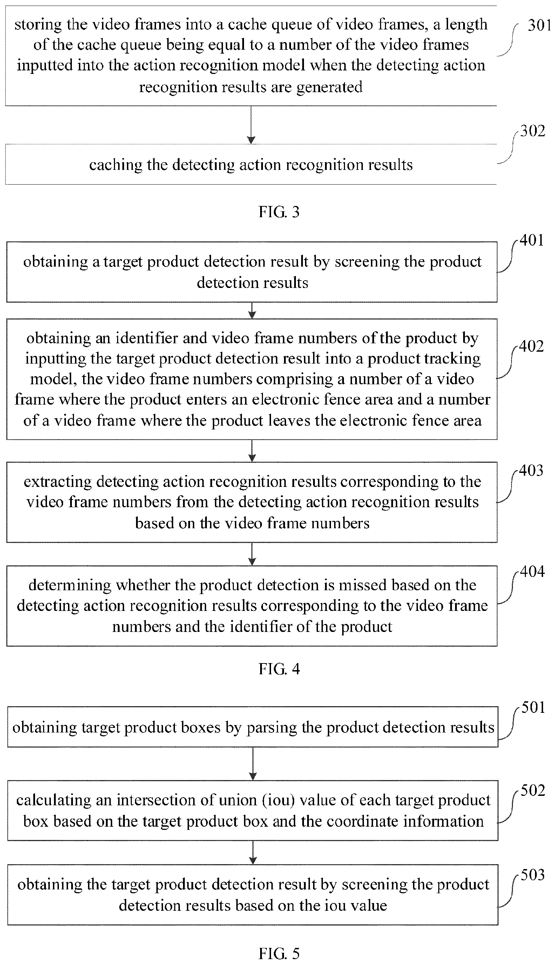

Further, in an embodiment of the disclosure, as illustrated in FIG 3, the method for recognizing the product detection missed may further include the following blocks at 301-302.

At 301, the video frames are stored into a cache queue of video frames. A length of the cache queue is equal to a number of the video frames inputted into the action recognition model when the detecting action recognition results are generated.

In detail, the video frames may also be stored in the cache queue of video frames after the video frames of the surveillance video are obtained by the electronic device.

At block 302, the detecting action recognition results are cached.

In detail, referring to FIG. 2, when the surveillance video is read frame by frame, the electronic device may not only store a current video frame in the video-frame database for training the product detection model and the action recognition model, but also store the current video frame in a cache queue of action video frames (i.e., the cache queue of video frames). The length of the cache queue is equal to the number of video frames inputted into the network (i.e., the action recognition model) when a result (i.e., the detecting action recognition result) is predicted by the action recognition model. In a case that the number of video frames inputted into the network exceeds a length of the cache queue of action video frames when the result is predicted by the action recognition model, a head video frame in the cache queue of action video frames may be moved out of the cache queue, the current video frame may be inserted into a tail of the cache queue, and the detecting action recognition results may be cached.

Further, referring to FIG 2, the electronic device may also cache the detecting action recognition results outputted by the action recognition model for subsequent use. In this way, corresponding information may be directly queried from the cache (i.e., a cache of model results) when needed, thus avoiding workload of action recognition for irrelevant video frames.

As a possible implementation, the detecting action recognition results outputted by the action recognition model may also be directly stored in the storage space of the electronic device for subsequent use.

For explaining the above embodiments clearly, in an embodiment of the disclosure, storing the video frames into the cache queue of video frames may include: in response to the cache queue of video frames being full, removing a head video frame from the cache queue of video frames, and inserting the video frames into a tail of the cache queue of video frames.

In detail, in the process of storing the current video frame into the cache queue of video frames, the electronic device may also detect whether the cache queue of video frames is full in real time. If yes, the head video frame may be moved out and the current video frame is inserted into the tail of the cache queue of video frames; and if no, normal insertion is continued.

In embodiments of the disclosure, referring to FIG 2, in the process of recognizing the product detection missed, input of the action recognition model may be directly obtained from the cache queue of video frames, or may be directly extracted from the surveillance video.

In this way, it may be implemented that the video frames are inputted into the action recognition model frame by frame, to output the detecting action recognition results, thus providing a condition for subsequent determination of whether detection for the product is missed.

Further, in an embodiment of the disclosure, as illustrated in FIG 4, determining whether the product detection is missed based on the product detection results and the detecting action recognition results may include the following blocks at 401-404.

At block 401, a target product detection result is obtained by screening the product detection results.

In embodiments of the disclosure, the product detection results may be screened based on a preset screening way to obtain the target product detection result. The preset screening way may be calibrated based on an actual situation.

In detail, the electronic device may screen the product detection results based on the preset screening way to obtain the target product detection result, after obtaining the product detection results.

At block 402, an identifier and video frame numbers of the product are obtained by inputting the target product detection result into a product tracking model. The video frame numbers include a serial number of a video frame where the product enters an electronic fence area and a serial number of a video frame where the product leaves the electronic fence area. The product tracking model may be a mask-rcnn (convolutional neural network) electrode detection model.

It should be noted that, the product tracking model described in embodiments may also be trained in advance and pre-stored in the storage space of the server for facilitating calling and application.

In embodiments of the disclosure, the product tracking model may be trained by employing frame samples of the surveillance video. Then a box obtained by a Kalman filter predicting the current video frame may be matched with a predicted result (e.g., an electrode box) of the product tracking model, and an iou (intersection over union) value is introduced to assist the box matching. Simultaneously, in order to alleviate a loss problem of the ID tracked (i.e., the identifier of the) caused by occlusion, a retention duration hyperparameter of a current matching box may be set, that is, information of the current matching box is retained within a specific duration.

In detail, after the target product detection result is obtained, the product tracking model may be called out from the storage space of the electronic device, and the target product detection result is inputted into the product tracking model, such that the identifier and the video frame numbers of the product outputted by the product tracking model are obtained by the product tracking model detecting the target product detection result.

It should be noted that, the identifier of the product described in embodiments may be a unique code of the product. The video frame numbers described in embodiments may be the numbers of current video frames where each product (electrode) at the electronic fence area in the industrial production line appears (i.e. enters) and ends (i.e. leaves).

At block 403, detecting action recognition results corresponding to the video frame numbers are extracted from the detecting action recognition results based on the video frame numbers.

At block 404, it is determined whether the product detection is missed based on the detecting action recognition results corresponding to the video frame numbers and the identifier of the product.

In detail, referring to FIG 2, the electronic device may query corresponding information from the cache of model results based on the video frame numbers, after obtaining the identifier of the product and the video frame numbers. That is, the detecting action recognition results corresponding to the video frame numbers are extracted from the above cached detecting action recognition results, and it is determined whether missed product detection occurs on the product based on the detecting action recognition results corresponding to the video frame numbers and the identifier of the product.

As a possible situation, after obtaining the identifier of the product and the video frame numbers, the electronic device may call out the detecting action recognition results from the storage space of the electronic device, extract the detecting action recognition results corresponding to the video frame numbers from the detecting action recognition results, and determine whether the product detection is missed based on the detecting action recognition results corresponding to the video frame numbers and the identifier of the product.

It should be noted that, referring to FIG 2, the extracted detecting action recognition results corresponding to the video frame numbers described in embodiments may include an intermediate video clip that identifies the appearance of the product in the electronic fence area and the departure of the product from the electronic fence area. It is determined whether the product (electrode) is correctly detected by people at the start and the end of the intermediate video clip, and then determined whether the electrode misses the product detection. Therefore, a workload of action recognition for irrelevant video frames is greatly avoided.

For explaining the above embodiments clearly, in an embodiment of the disclosure, obtaining the target product detection result by screening the product detection results includes: obtaining coordinate information corresponding to the electronic fence area; and obtaining the target product detection result by screening the product detection results based on the coordinate information.

It should be noted that, the electronic fence area described in embodiments may be an area set by a relevant personnel, that is, an area set by the relevant personnel in the industrial production line. The coordinate information corresponding to the electronic fence area may be stored in the storage space of the electronic device in advance, which is convenient to obtain in subsequent use.

In detail, referring to FIG 2, after the product detection results are obtained, the coordinate information corresponding to the electronic fence area may be obtained from the storage space of the electronic device, and the product detection results are screened based on the coordinate information to obtain the target product detection result.

For explaining the above embodiments clearly, in an embodiment of the disclosure, as illustrated in FIG 5, obtaining the target product detection result by screening the product detection results based on the coordinate information may include the following blocks at 501-503.

At block 501, target product boxes are obtained by parsing the product detection result.

It should be noted that, the target product box described in embodiments is employed to characterize an area where the product is located. For example, the target product box may be a minimum box surrounding the product, and coordinate information of the minimum box characterizes coordinate information of the product. There may be multiple target product boxes, and the target product box may also be called a target electrode box.

In detail, the coordinate information corresponding to the electronic fence area may be obtained from the storage space of the electronic device after the product detection results are obtained by the electronic device, and the product detection results are parsed based on a preset parsing algorithm to obtain the target product boxes in the product detection result. The preset parsing algorithm may be calibrated based on an actual situation.

At block 502, an intersection of union (iou) value of each target product box is calculated based on the target product box and the coordinate information.

At block 503, the target product detection result is obtained by screening the product detection results based on the iou value.

In detail, after the target product boxes in the product detection results are obtained by the electronic device, an iou value (i.e., the iou value of each target product box and the electronic fence area) of each target product box may be calculated based on the coordinate information corresponding to the electronic fence area. A target product box whose iou value is greater than a designated threshold is reserved, and the product detection results are screened based on the iou value to obtain the target product detection result. In this way, a large number of background electrodes (products) in irrelevant areas may be removed, and time consumption of the whole algorithm is reduced.

Further, in an embodiment of the disclosure, the action recognition model may include a first recognition channel and a second recognition channel. A sampling rate of the first recognition channel is lower than that of the second recognition channel.

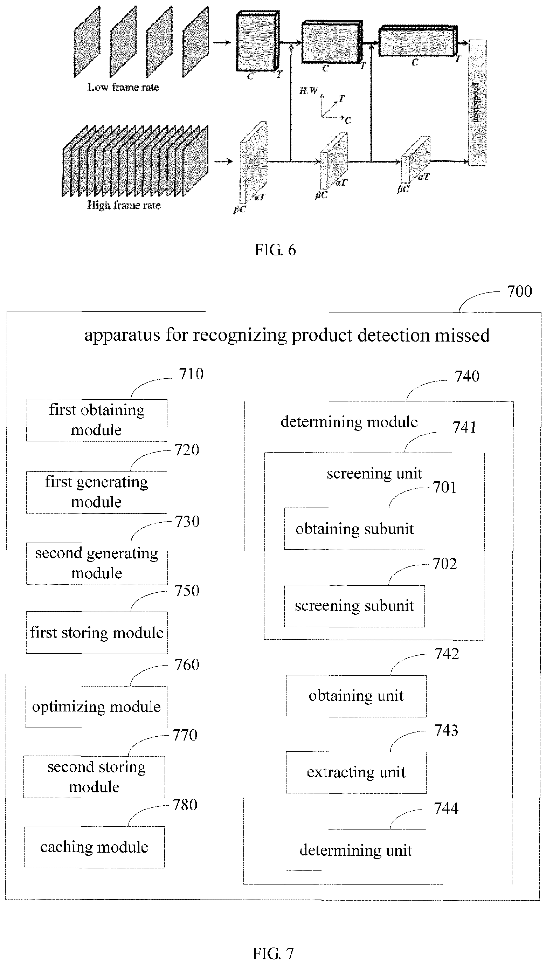

It should be noted that, referring to FIG 6, the first recognition channel and the second recognition channel described in embodiments may be a slow channel and a fast channel. Both the slow channel and the fast channel may employ a 3D (three-dimensional) convolution module. Video frames with a large time span (i.e. fewer video frames are sampled per unit period) are inputted into the slow channel, while video frames with a small time span (i.e. more video frames are sampled per unit period) are inputted into the fast channel.

For explaining the above embodiments clearly, in an embodiment of the disclosure, generating the detecting action recognition results by inputting the video frames of the surveillance video into the action recognition model includes: generating a first recognition result by inputting the video frames into the first recognition channel and generating a second recognition result by inputting the video frames into the second recognition channel; and generating the detecting action recognition results based on the first recognition result and the second recognition result.

In detail, referring to FIG 6, after the electronic device inputs the video frames of the surveillance video into the action recognition model, the video frames of the surveillance video may be detected and recognized by the slow channel (first recognition channel) and the fast channel (second recognition channel) in the action recognition model at the same time, to generate the first recognition result and the second recognition result. Finally, the detecting action recognition results are generated by the electronic device based on the first recognition result and second recognition result, thus improving prediction coherence and consistency of the action recognition model.

Further, referring to FIG 6, the slow channel (first recognition channel) and the fast channel (second recognition channel) in the action recognition model may be configured to detect and recognize the video frames of the surveillance video at the same time. Data conversion may be performed on a result of the fast channel to generate an intermediate result, and the intermediate result may be added to the slow channel in stages, to generate the first recognition result and second recognition result. Finally, the electronic device may be configured to generate the detecting action recognition results based on the first recognition result and the second recognition result.

In conclusion, with the method for recognizing the product detection missed in embodiments of the disclosure, the surveillance video is obtained first, and the product detection results are generated by inputting the video frames of the surveillance video into the product detection model. Then the detecting action recognition results are generated by inputting the video frames of the surveillance video into the action recognition model. Finally, it is determined whether product detection is missed based on the product detection results and the detecting action recognition results. In this way, it may be quickly determined whether detection of a product in an industrial production line is missed, with a high accuracy.

FIG 7 is a structural block diagram illustrating an apparatus for recognizing product detection missed according to embodiments of the disclosure.

The apparatus for recognizing product detection missed according to embodiments of the disclosure may be configured in the electronic device, to implement: generating product detection results by inputting video frames of an obtained surveillance video into a product detection model; generating detecting action recognition results by inputting the video frames of the obtained surveillance video into an action recognition model; and determining whether product detection is missed based on the product detection results and the detecting action recognition results. Therefore, it may be quickly determined detection of whether a product in an industrial production line is missed, with a high detection accuracy.

As illustrated in FIG 7, the apparatus 700 for recognizing the product detection missed may include a first obtaining module 710, a first generating module 720, a second generating module 730, and a determining module 740.

The first obtaining module 710 is configured to obtain a surveillance video.

It should be noted that, the surveillance video described in embodiments may be collected by a surveillance device on a product production line (i.e., the industrial production line). The surveillance device may include a high-definition camera, a sensor, and the like.

A communication connection may be established between the surveillance device and the electronic device that may execute the method for recognizing the product detection missed according to embodiments of the disclosure. The communication connection may be at least one of wireless network connection and wired network connection, such that the surveillance device may transmit (send) the surveillance video collected to the first obtaining module 710 of the electronic device in real time. Alternatively, the surveillance video in the surveillance device may be manually copied and inputted into the electronic device.

The first generating module 720 is configured to generate product detection results by inputting video frames of the surveillance video into a product detection model. It should be noted that, the product detection model described in embodiments may be trained in advance and pre-stored in a storage space of the electronic device for facilitating calling and application of the first generating module 720. The storage space is not limited to an entity-based storage space, such as a hard disk, but also a storage space (cloud storage space) of a network hard disk connected to the electronic device.

Training and generation of the product detection model may be performed by a training server. The training server may be the cloud server or a host of a computer. A communication connection is established between the training server and the electronic device provided with the apparatus for recognizing the product detection missed according to embodiments of the disclosure. The communication connection may be at least one of the wireless network connection and the wired network connection. The training server may send the product detection model trained to the electronic device, such that the first generating module 720 may call the product detection model when needed, thus greatly reducing a calculation pressure of the electronic device.

In embodiments of the disclosure, the first generating module 720 may first perform frame extraction processing on the surveillance video to obtain the video frames of the surveillance video after the first obtaining module 710 obtains the surveillance video.

In detail, after the first obtaining module 710 obtains the surveillance video, the first generating module 720 may obtain the video frames of the surveillance video by performing frame extraction processing on the surveillance video based on a preset frame-extracting algorithm. The preset frame-extracting algorithm may be calibrated based on an actual situation. For example, the preset frame-extracting algorithm may be a frame-extracting resampling algorithm.

As a possible implementation, the first generating module 720 may obtain the video frames of the surveillance video by performing frame extraction processing on the surveillance video based on a frame-extracting model after the first obtaining module 710 obtains the surveillance video. It should be noted that, the frame-extracting model described in embodiments may be trained in advance and pre-stored in the storage space of the electronic device for facilitating calling and application.

As another possible implementation, the first obtaining module 710 obtains the surveillance video, the first generating module 720 may also obtain the video frames of the surveillance video by performing frame extraction processing on the surveillance video with a frame extraction tool (e.g., a plug-in).

Further, after the first generating module 720 obtains the video frames of the surveillance video, the product detection model may be called out from the storage space of the electronic device, and the video frames may be inputted into the product detection model, such that the video frames of the surveillance video may be detected by the product detection model, to obtain the product detection results outputted (generated) by the product detection model.

It should be noted that, the product detection model described in embodiments may be a detection model for an electrode, a glove and a body. The detection model for the electrode, the glove and the body may include a variety of electrode detection sub-models, glove detection sub-models, human detection sub-models, and the like, and a specific situation may be set as required.

In embodiments of the disclosure, after the first obtaining module 710 obtains the video frames of the surveillance video, the first generating module 720 may also scale each video frame, and input the video frame scaled into the product detection model to generate the product detection results.

The second generating module 730 is configured to generate detecting action recognition results by inputting the video frames of the surveillance video into an action recognition model. It should be noted that, the action recognition model described in embodiments may also be trained in advance, and stored in the storage space of the electronic device in advance for facilitating recall application of the second generating module 730.

In detail, after the first generating module 720 obtains the video frames of the surveillance video, the second generating module 730 may call out the action recognition model from the storage space of the electronic device, and input the video frames into the action recognition model, such that the video frames (such as, detecting an electrode) of the surveillance video are recognized by the action recognition model, to obtain the detecting action recognition results outputted (generated) by the action recognition model.

The determining module 740 is configured to determine whether product detection is missed based on the product detection results and the detecting action recognition results.

In detail, after the second generating module 730 obtains the product detection results and the detecting action recognition results, the determining module 740 may parse the product detection results and the detecting action recognition results to determine whether the product (i.e., a product produced (transported) on the industrial production line) misses the product detection based on a result parsed.

With embodiments of the disclosure, the first obtaining module is configured to obtain the surveillance video first, and the first generating module is configured to generate the product detection results by inputting video frames of the surveillance video into the product detection model. Then, the second generating module is configured to generate the detecting action recognition results by inputting the video frames of the surveillance video into the action recognition model. Finally, the determining module is configured to determine whether product detection is missed based on the product detection results and the detecting action recognition results. In this way, it may be quickly determined whether detection of a product in an industrial production line is missed, with a high detection accuracy.

In an embodiment of the disclosure, the apparatus 700 for recognizing the product detection missed may also include: a first storing module 750 and an optimizing module 760.

The first storing module 750 is configured to store the video frames of the surveillance video into a video-frame database as training samples.

The optimizing module 760 is configured to optimize the product detection model and the action recognition model respectively based on the training samples.

In an embodiment of the disclosure, the apparatus 700 for recognizing the product detection missed may also include: a second storing module 770 and a caching module 780.

The second storing module 770 is configured to store the video frames into a cache queue of video frames. A length of the cache queue is equal to a number of the video frames inputted into the action recognition model when the detecting action recognition results are generated.

The caching module 780 is configured to cache the detecting action recognition results.

In an embodiment of the disclosure, the second storing module 760 is configured to: remove a head video frame from the cache queue of video frames, and insert the video frames into a tail of the cache queue of video frames in response to the cache queue of video frames being full

In an embodiment of the disclosure, the determining module 740 includes: a screening unit 741, an obtaining unit 742, an extracting unit 743, and a determining unit 744.

The screening unit 741 is configured to obtain a target product detection result by screening the product detection results.

The obtaining unit 742 is configured to obtain an identifier and video frame numbers of the product by inputting the target product detection result into a product tracking model. The video frame numbers include a number of a video frame where the product enters an electronic fence area and a number of a video frame where the product leaves the electronic fence area.

The extracting unit 743 is configured to extract detecting action recognition results corresponding to the video frame numbers from the detecting action recognition results based on the video frame numbers.

The determining unit 744 is configured to determine whether the product detection is missed based on the detecting action recognition result corresponding to the video frame numbers and the identifier of the product.

In an embodiment of the disclosure, as illustrated in FIG 7, the screening unit 741 may include: an obtaining subunit 701 and a screening subunit 702.

The obtaining subunit 701 is configured to obtain coordinate information corresponding to the electronic fence area.

The screening subunit 702 is configured to obtain the target product detection result by screening the product detection results based on the coordinate information.

In an embodiment of the disclosure, the screening subunit 702 is configured to: obtain target product boxes by parsing the product detection results; calculate an intersection of union (iou) value of each target product box based on the target product box and the coordinate information; and obtain the target product detection result by screening the product detection results based on the iou value.

In an embodiment of the disclosure, the action recognition model includes a first recognition channel and a second recognition channel. A sampling rate of the first recognition channel is lower than that of the second recognition channel. The second generating module 730 is configured to: generate a first recognition result by inputting the video frames into the first recognition channel and generate a second recognition result by inputting the video frames into the second recognition channel; and generate the detecting action recognition results based on the first recognition result and the second recognition result.

It should be noted that, the above explanation and illustration for embodiments of the method for recognizing the product detection missed may also be applicable to embodiments of the apparatus for recognizing the product detection missed, which is not elaborated herein.

With the apparatus for recognizing the product detection missed according to embodiments of the disclosure, the first obtaining module is configured to obtain the surveillance video first, and the first generating module is configured to generate the product detection results by inputting video frames of the surveillance video into the product detection model. Then, the second generating module is configured to generate the detecting action recognition results by inputting the video frames of the surveillance video into the action recognition model. Finally, the determining module is configured to determine whether product detection is missed based on the product detection results and the detecting action recognition results. In this way, it may be quickly determined whether detection of a product in an industrial production line is missed, with a high detection accuracy.

According to embodiments of the disclosure, the disclosure also provides an electronic device, a readable storage medium, and a computer program product.

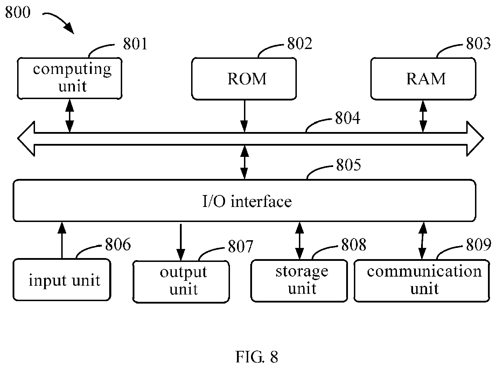

FIG 8 is a block diagram illustrating an electronic device 800 for implementing embodiments of the disclosure. The electronic device aims to represent various forms of digital computers, such as a laptop computer, a desktop computer, a workstation, a personal digital assistant, a server, a blade server, a mainframe computer and other suitable computer. The electronic device may also represent various forms of mobile devices, such as personal digital processing, a cellular phone, a smart phone, a wearable device and other similar computing device. The components, connections and relationships of the components, and functions of the components illustrated herein are merely examples, and are not intended to limit the implementation of the disclosure described and/or claimed herein.

As illustrated in FIG 8, the device 800 includes a computing unit 801. The computing unit 801 may perform various appropriate actions and processes based on a computer program stored in a read only memory (ROM) 802 or loaded from a storage unit 808 into a random access memory (RAM) 803. In the RAM 803, various programs and data required for the operation of the device 800 may also be stored. The computing unit 801, the ROM 802, and the RAM 803 are connected to each other via a bus 804. An input/output (I/O) interface 805 is also connected to the bus 804.

Multiple components in the device 800 are connected to the I/O interface 805. The multiple components include an input unit 806, such as a keyboard, and a mouse; an output unit 807, such as various types of displays and speakers; a storage unit 808, such as a magnetic disk, and an optical disk; and a communication unit 809, such as a network card, a modem, and a wireless communication transceiver. The communication unit 809 allows the device 800 to exchange information/data with other devices via a computer network such as the Internet and/or various telecommunication networks.

The computing unit 801 may be various general-purpose and/or special-purpose processing components with processing and computing capabilities. Some examples of the computing unit 801 include, but are not limited to, a central processing unit (CPU), a graphics processing unit (GPU), various dedicated artificial intelligence (AI) computing chips, various computing units running machine learning model algorithms, a digital signal processor (DSP), and any suitable processor, controller, microcontroller, etc. The computing unit 801 performs various methods and processes described above, such as the method for recognizing the product detection missed. For example, in some embodiments, the method for recognizing the product detection missed may be implemented as a computer software program tangibly embodied in a machine-readable medium, such as the storage unit 808. In some embodiments, a part or all of the computer program may be loaded and/or installed on the device 800 via the ROM 802 and/or the communication unit 809. When the computer program is loaded into the RAM 803 and executed by the computing unit 801, one or more steps of the method for recognizing the product detection missed described above may be executed. Alternatively, in other embodiments, the computing unit 801 may be configured to perform the method for recognizing the product detection missed by any other suitable means (for example, by means of firmware).

Various implementations of the systems and techniques described above herein may be implemented in a digital electronic circuit system, an integrated circuit system, a field programmable gate array (FPGA), an application specific integrated circuit (ASIC), an application specific standard product (ASSP), a system on a chip (SOC), a load programmable logic device (CPLD), computer hardware, firmware, software, and/or a combination thereof. These various implementations may include being implemented in one or more computer programs. The one or more computer programs may be executed and/or interpreted on a programmable system including at least one programmable processor. The programmable processor may be a special purpose or general purpose programmable processor and receive data and instructions from and transmit data and instructions to a storage system, at least one input device, and at least one output device.

The program codes for implementing the method of the disclosure may be written in any combination of one or more programming languages. These program codes may be provided to a processor or controller of a general purpose computer, a special purpose computer, or other programmable data processing apparatus, such that the program codes, when executed by the processor or controller, cause the functions/operations specified in the flow charts and/or block diagrams to be implemented. The program codes may be executed completely on the machine, partially on the machine, partially on the machine as an independent software package and partially on a remote machine or completely on a remote machine or server.

In the context of the disclosure, a machine-readable medium may be a tangible medium, which may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, an apparatus, or a device, or any suitable combination of the above. More specific examples of the machine-readable storage medium may include one or more wire-based electrical connections, a portable computer disk, a hard disk, a RAM, a ROM, an erasable programmable read-only memory (EPROM or flash memory), an optical fiber, a portable compact disk read-only memory (CD-ROM), an optical storage device, a magnetic storage device, or any suitable combination of the above.

To provide interaction with a user, the system and technologies described herein may be implemented on a computer. The computer has a display device (such as, a CRT (cathode ray tube) or a LCD (liquid crystal display) monitor) for displaying information to the user, a keyboard and a pointing device (such as, a mouse or a trackball), through which the user may provide the input to the computer. Other types of devices may also be configured to provide interaction with the user. For example, the feedback provided to the user may be any form of sensory feedback (such as, visual feedback, moderationory feedback, or tactile feedback), and the input from the user may be received in any form (including acoustic input, voice input or tactile input).

The system and technologies described herein may be implemented in a computing system including a background component (such as, a data server), a computing system including a middleware component (such as, an application server), or a computing system including a front-end component (such as, a user computer having a graphical user interface or a web browser through which the user may interact with embodiments of the system and technologies described herein), or a computing system including any combination of such background component, the middleware components and the front-end component. Components of the system may be connected to each other via digital data communication in any form or medium (such as, a communication network). Examples of the communication network include a local area network (LAN), a wide area networks (WAN), and the Internet.

The computer system may include a client and a server. The client and the server are generally remote from each other and generally interact via the communication network. A relationship between the client and the server is generated by computer programs operated on a corresponding computer and having a client-server relationship with each other. The server may be a cloud server, a distributed system server or a server combined with a block chain.

It should be understood that, steps may be reordered, added or deleted by utilizing flows in the various forms illustrated above. For example, the steps described in the disclosure may be executed in parallel, sequentially or in different orders, so long as desired results of the technical solution disclosed in the disclosure may be achieved, there is no limitation here.

The above detailed implementations do not limit the protection scope of the disclosure. It should be understood by the skilled in the art that various modifications, combinations, sub-combinations and substitutions may be made based on design requirements and other factors. Any modification, equivalent substitution and improvement made within the principle of the disclosure shall be included in the protection scope of disclosure.

## Claims

1. A method for recognizing product detection missed, comprising:
obtaining a surveillance video;
generating product detection results by inputting video frames of the surveillance video into a product detection model;
generating detecting action recognition results by inputting the video frames of the surveillance video into an action recognition model; and
determining whether product detection is missed based on the product detection results and the detecting action recognition results.

2. The method of claim 1, further comprising:
storing the video frames of the surveillance video into a video-frame database as training samples; and
optimizing the product detection model and the action recognition model respectively based on the training samples.

3. The method of claim 1, further comprising:
storing the video frames into a cache queue of video frames, a length of the cache queue being equal to a number of the video frames inputted into the action recognition model when the detecting action recognition results are generated; and/or
caching the detecting action recognition results.

4. The method of claim 3, wherein storing the video frames into the cache queue of video frames comprises:
in response to the cache queue of video frames being full, removing a head video frame from the cache queue of video frames, and inserting the video frames into a tail of the cache queue of video frames.

5. The method of claim 1, wherein determining whether the product detection is missed based on the product detection results and the detecting action recognition results comprises:
obtaining a target product detection result by screening the product detection results;
obtaining an identifier and video frame numbers of the product by inputting the target product detection result into a product tracking model, the video frame numbers comprising a number of a video frame where the product enters an electronic fence area and a number of a video frame where the product leaves the electronic fence area;
extracting detecting action recognition results corresponding to the video frame numbers from the detecting action recognition results based on the video frame numbers; and
determining whether the product detection is missed based on the detecting action recognition results corresponding to the video frame numbers and the identifier of the product.

6. The method of claim 5, wherein obtaining the target product detection result by screening the product detection results comprises:
obtaining coordinate information corresponding to the electronic fence area; and
obtaining the target product detection result by screening the product detection results based on the coordinate information.

7. The method of claim 6, wherein obtaining the target product detection result by screening the product detection results based on the coordinate information comprises:
obtaining target product boxes by parsing the product detection results;
calculating an intersection of union (iou) value of each target product box based on the target product box and the coordinate information; and
obtaining the target product detection result by screening the product detection results based on the iou value.

8. The method of any of claims 1 to 7, wherein the action recognition model comprises a first recognition channel and a second recognition channel, a sampling rate of the first recognition channel is lower than that of the second recognition channel, and generating the detecting action recognition results by inputting the video frames of the surveillance video into the action recognition model comprises:
generating a first recognition result by inputting the video frames into the first recognition channel and generating a second recognition result by inputting the video frames into the second recognition channel; and
generating the detecting action recognition results based on the first recognition result and the second recognition result.

9. An apparatus for recognizing product detection missed, comprising:
a first obtaining module, configured to obtain a surveillance video;
a first generating module, configured to generate product detection results by inputting video frames of the surveillance video into a product detection model;
a second generating module, configured to generate detecting action recognition results by inputting the video frames of the surveillance video into an action recognition model; and
a determining module, configured to determine whether product detection is missed based on the product detection results and the detecting action recognition results.

10. The apparatus of claim 9, further comprising:
a first storing module, configured to store the video frames of the surveillance video into a video-frame database as training samples; and
an optimizing module, configured to optimize the product detection model and the action recognition model respectively based on the training samples.

11. The apparatus of claim 9, further comprising:
a second storing module, configured to store the video frames into a cache queue of video frames, a length of the cache queue being equal to a number of the video frames inputted into the action recognition model when the detecting action recognition results are generated; and/or
a caching module, configured to cache the detecting action recognition results.

12. The apparatus of claim 11, wherein the second storing module is configured to:
remove a head video frame from the cache queue of video frames, and insert the video frames into a tail of the cache queue of video frames in response to the cache queue of video frames being full.

13. The apparatus of claim 9, wherein the determining module comprises:
a screening unit, configured to obtain a target product detection result by screening the product detection results ;
an obtaining unit, configured to obtain an identifier and video frame numbers of the product by inputting the target product detection result into a product tracking model, the video frame numbers comprising a number of a video frame where the product enters an electronic fence area and a number of a video frame where the product leaves the electronic fence area;
an extracting unit, configured to extract detecting action recognition results corresponding to the video frame numbers from the detecting action recognition results based on the video frame numbers; and
a determining unit, configured to determine whether the product detection is missed based on the detecting action recognition result corresponding to the video frame numbers and the identifier of the product.

14. The apparatus of claim 13, wherein the screening unit comprises:
an obtaining subunit, configured to obtain coordinate information corresponding to the electronic fence area; and
a screening subunit, configured to obtain the target product detection result by screening the product detection results based on the coordinate information .

15. The apparatus of claim 14, wherein the screening subunit is configured to:
obtain target product boxes by parsing the product detection results;
calculate an intersection of union (iou) value of each target product box based on the target product box and the coordinate information; and
obtain the target product detection result by screening the product detection results based on the iou value.

16. The apparatus of any of claims 9 to 15, wherein the action recognition model comprises a first recognition channel and a second recognition channel, a sampling rate of the first recognition channel is lower than that of the second recognition channel, and the second generating module is configured to:
generate a first recognition result by inputting the video frames into the first recognition channel and generate a second recognition result by inputting the video frames into the second recognition channel; and
generate the detecting action recognition results based on the first recognition result and the second recognition result.

17. An electronic device, comprising:
at least one processor; and
a memory, communicatively coupled to the at least one processor,
wherein the memory is configured to store instructions executable by the at least one processor, and the at least one processor is caused to execute the method for recognizing the product detection missed according to any one of claims 1 to 8 when the instructions are executed by the at least one processor.

18. A non-transitory computer readable storage medium having computer instructions stored thereon, wherein the computer instructions are configured to cause a computer to execute the method for recognizing the product detection missed according to any one of claims 1 to 8.

19. A computer program product, comprising a computer program, wherein the computer program is caused to implement the method for recognizing the product detection missed according to any one of claims 1 to 8 when processed by a processor.
